# EUROPÄISCHE PATENTSCHRIFT

(11) **EP 3 543 181 B1**
(45) Veröffentlichungstag und Bekanntmachung des Hinweises auf die Patenterteilung: **27.11.2024**
(21) Anmeldenummer: 19162721.5
(22) Anmeldetag: 14.03.2019
(51) Int. Cl.: B65G 43/08, B65G 47/61

(54) **FÖRDERVORRICHTUNG ZUM EINTAKTEN VON TRANSPORTEINHEITEN**
CONVEYOR DEVICE FOR THE CLOCK-INTEGRATION OF TRANSPORT UNITS
APPAREIL DE CONVOYAGE PERMETTANT DE FAIRE AVANCER EN RYTHME DES UNITÉS DE CONVOYAGE

(30) Priorität: 20.03.2018 CH 3692018
(43) Veröffentlichungstag der Anmeldung: 25.09.2019
(73) Patentinhaber: FERAG AG, 8340 Hinwil (CH)
(72) Erfinder: GALLATI, Rudolf, 8732 Neuhaus (CH); FENILE, Roberto, 8623 Wetzikon (CH)
(74) Vertreter: Rentsch Partner AG

(56) Entgegenhaltungen:
- EP-A1- 0 765 826
- DE-A1- 102007 025 553
- JP-A- H01 203 115

## Beschreibung

### TECHNISCHES GEBIET

Die vorliegende Erfindung betrifft eine Fördervorrichtung zum Eintakten von Transporteinheiten und ein Verfahren zum Betrieb einer Fördervorrichtung.

### HINTERGRUND DER ERFINDUNG

In der Intralogistik kommen verschiedene Vorrichtungen zum Fördern von Transportgütern zum Einsatz, wobei die Transportgüter typischerweise mit geeigneten Transporteinheiten gefördert werden. Je nach Anforderung können die Transporteinheiten mit festem Abstand zueinander, z.B. wenn in bestimmten Förderabschnitten eine getaktete Förderung erwünscht ist, oder mit veränderlichem Abstand, z.B. in Pufferstrecken, zueinander gefördert werden. Innerhalb einer intralogistischen Förderanlage können dabei verschiedene Förderstrecken mit solchen unterschiedlichen Förderarten angeordnet und aneinander angeschlossen sein.

Insbesondere sind in diesem Zusammenhang die Übergänge von Förderabschnitten mit Transporteinheiten mit veränderlichem Abstand zueinander zu Förderabschnitten mit festem Abstand zwischen den Transporteinheiten, z.B. beim Eintakten in einen Taktförderer, technisch anspruchsvoll, da oft eine erhöhte Fehleranfälligkeit und die Wahrscheinlichkeit einer reduzierten Förderkapazität gegeben ist.

Besonders zahlreich und relevant können solche Übergänge mit der steigenden Komplexität der intralogistischen Anforderungen werden, zum Beispiel in Kommissionieranlagen, in welchen unterschiedliche, insbesondere hängend transportierbare, Waren bei einem hohen Durchsatz effizient sortiert und vollständig sowie fehlerfrei zusammengestellt werden sollen.

Eine solche Kommissionieranlage ist z.B. in der am 20. Juli 201 7 hinterlegten Anmeldung CH00947/17 der Anmelderin beschrieben, welche eine Aufgabestation mit einer Mehrzahl von parallel angeordneten Aufgabeplätzen zur Aufgabe der zu kommissionierenden Waren in die Kommissionieranlage sowie wenigstens eine Versandstation mit einer Mehrzahl von parallel angeordneten Versandplätzen zur Abgabe der kommissionierten Waren an den Versand, wobei zur Kommissionierung der Waren zwischen der Aufgabestation und der Versandstation wenigstens ein Zwischenspeicher vorgesehen ist. Der wenigstens eine Zwischenspeicher umfasst einen dynamischen Speicher zur Zwischenspeicherung der für die Kommissionierung bereitgestellten Waren und einen dem dynamischen Speicher nachgeschalteten Abrufspeicher zum Speichern von aus dem dynamischen Speicher ausgespeicherten und dabei vorsortierten Waren, welche innerhalb eines gemeinsamen Umlaufförderers angeordnet sind und über den gemeinsamen Umlaufförderer miteinander in Verbindung stehen.

EP0765826A1 wurde am 29.08.1996 im Namen der Dürkopp Adler AG veröffentlicht und betrifft ein Verfahren zum Fördern von auf Bügel hängendem Fördergut, insbesondere Kleidungsstücke, wobei das Fördergut von einem Aufgabebereich in einen Förderbereich und von dort in einen Abgabebereich transportiert wird, sowie Vorrichtungen zur Verwendung in dem Verfahren. Das Fördersystem verfügt über einen Transportbereich (II) zum Zuführen der Kleidungsstücke zwischen einem Eingabebereich (I) und einem Auslieferungsbereich (III), wobei die Greifer mit einer Gruppe von Kleiderbügeln kooperieren, die in einem definierten relativen Abstand entlang des Transportbereichs bewegt werden. Die Greifer werden am Eingangsbereich gehalten und dem Transportbereich so zugeführt, dass sie in den nächsten verfügbaren Transportschlitz passen, wobei die Bewegung jedes Greifers durch den Transportbereich durch Zählen von Taktimpulsen erfolgt, wobei die Bewegung in den Auslieferungsbereich erfolgt, wenn eine bestimmte Taktzahl erreicht ist.

### DARSTELLUNG DER ERFINDUNG

Es ist daher eine Aufgabe der Erfindung, eine Fördervorrichtung zum Eintakten von Transporteinheiten und ein Verfahren zum Betrieb einer solchen Fördervorrichtung bereitzustellen, welche den Stand der Technik zum Eintakten von Transporteinheiten mindestens teilweise verbessern.

Diese Aufgabe wird durch die Merkmale der unabhängigen Ansprüche gelöst. Vorteilhafte Ausgestaltungen der Erfindung sind in den abhängigen Ansprüchen und in der vorliegenden Beschreibung und den Figuren gegeben.

Die Erfindung betrifft eine Fördervorrichtung zum Eintakten von Transporteinheiten, umfassend eine Mehrzahl von Transporteinheiten, einen Taktförderer zum getakteten Fördern der Transporteinheiten, der Taktförderer umfassend eine Mehrzahl von Mitnehmern, welche jeweils mit einer Transporteinheit lösbar verbindbar sind, mindestens eine Förderstrecke und eine Weichenvorrichtung, über welche die Förderstrecke an einer Eintaktstelle an den Taktförderer angeschlossen ist, und welche eingerichtet ist, die Transporteinheiten an der Eintaktstelle in den Taktförderer einzutakten. An der Förderstrecke ist eine erste Ermittlungsvorrichtung angeordnet, welche eingerichtet ist, jeweils die Ausdehnung einer Transporteinheit zu ermitteln. Die Fördervorrichtung weist eine Steuerung auf, welche mit der ersten Ermittlungsvorrichtung und mit der Weichenvorrichtung verbunden und eingerichtet ist, den Taktförderer entlang der Förderrichtung in logische Segmente mit jeweils mindestens einem zugeordneten Ausdehnungsbereich zu unterteilen und die jeweilige ermittelte Ausdehnung einer Transporteinheit an der Eintaktstelle mit dem mindestens einen Ausdehnungsbereich eines logischen Segments an der Eintaktstelle zu vergleichen, wobei die Weichenvorrichtung eingerichtet ist, eine Transporteinheit in den Taktförderer einzutakten, wenn die ermittelte Ausdehnung der Transporteinheit an der Eintaktstelle im mindestens einen Ausdehnungsbereich des logischen Segments an der Eintaktstelle liegt.

Im Taktförderer sind die Mitnehmer in der Regel mit einem festen Abstand zueinander angeordnet, so dass die Transporteinheiten mit einem festen Abstand zueinander förderbar sind. Im Zusammenhang mit der vorliegenden Erfindung ist daher unter getakteter Förderung ein Fördern von Transporteinheiten mit einem bestimmten Abstand zueinander zu verstehen, wobei der Taktförderer typischerweise eine Unterteilung zur festen Anordnung der Mitnehmer aufweist. Die Mitnehmer sind dabei derart mit den Transporteinheiten lösbar verbindbar, dass zwischen bestimmten Mitnehmern, welche in Eingriff mit Transporteinheiten stehen, freie Mitnehmer ohne Transporteinheiten angeordnet sein können.

Dem Fachmann ist in diesem Zusammenhang klar, dass mit "festem Abstand" Toleranzen und Verschiebungen innerhalb des Taktförderers, z.B. durch Belastungen einer Kette, mit eingeschlossen sind. Im Gegensatz zu unabhängig und mit veränderlichem Abstand zueinander förderbaren Transporteinheiten sind in einem Taktförderer die Transporteinheiten als nicht unabhängig voneinander und getaktet förderbar zu verstehen.

Eine hohe Förderkapazität kann dabei bereitgestellt werden, indem bei der Förderung eine möglichst hohe Anzahl von Mitnehmern mit Transporteinheiten in Eingriff steht und die Anzahl von freien Mitnehmern minimiert wird. Aufgrund der festen Unterteilung des Taktförderers, z.B. durch eine Kette, ist in der Regel die minimale Anzahl von freien Mitnehmern zwischen aufeinanderfolgenden mit Transporteinheiten besetzten Mitnehmern im Wesentlichen durch die Ausdehnung der Transporteinheiten, z.B. durch die Tiefe in Förderrichtung, bestimmt. Um die Fehleranfälligkeit bei der Eintaktung, insbesondere von Transporteinheiten mit unterschiedlichen Ausdehnungen, zu reduzieren, und u.a. eine Weichenschaltzeit zu berücksichtigen, kann z.B. die Weichenvorrichtung die Transporteinheiten von der Förderstrecke in den Taktförderer derart eintakten, dass unabhängig von der Ausdehnung der Transporteinheiten eine ausreichend hohe Minimalanzahl von Mitnehmern zwischen jeweils aufeinanderfolgenden besetzten Mitnehmern freigehalten wird, was sich aber üblicherweise negativ auf die Förderkapazität auswirkt.

Die Erfindung bietet den Vorteil, dass die Fehleranfälligkeit bei der Eintaktung tief gehalten und gleichzeitig die Anzahl von freien Mitnehmern minimiert werden kann, so dass die Förderkapazität optimiert wird. Durch die erste Ermittlungsvorrichtung kann die jeweilige Ausdehnung der Transporteinheiten an der Eintaktstelle ermittelt und an die Steuerung übermittelt werden. Mit der Unterteilung des Taktförderers in logische Segmente mit jeweils mindestens einem zugeordneten Ausdehnungsbereich kann die Besetzung der Mitnehmer mit Transporteinheiten entlang des Taktförderers an die Variabilität der Ausdehnungen der Transporteinheiten angepasst werden. Durch die Zuordnung eines Ausdehnungsbereichs kann ein bestimmter Bereich von Ausdehnungswerten bestimmt werden, für welche Transporteinheiten in ein bestimmtes logisches Segment eingetaktet werden können. Dies erlaubt es, Toleranzen in den ermittelten Ausdehnungen der Transporteinheiten aufzunehmen. Ferner ist es auch möglich, Transporteinheiten mit unterschiedlichen Ausdehnungen, welche im gleichen logischen Segment gefördert werden können, z.B. da die Ausdehnungen sich nicht zu stark unterscheiden, in ein bestimmtes logisches Segment einzutakten.

Die Unterteilung des Taktförderers in logische Segmente wird vorzugsweise durch die Steuerung vorgenommen und kann durch die Steuerung geändert werden. Insbesondere kann die Länge der logischen Segmente, bzw. die Anzahl der Mitnehmer in einem logischen Segment oder welche spezifischen Mitnehmer im jeweiligen logischen Segment enthalten sind, durch die Steuerung angepasst werden.

Die Ausdehnung einer Transporteinheit kann in Ausgestaltungen eine Tiefe der Transporteinheit in Förderrichtung und/oder eine Breite der Transporteinheit quer zur Förderrichtung oder andere geometrische Dimensionen umfassen. Die Ermittlungsvorrichtung, die Steuerung sowie die Weichenvorrichtung können entsprechend zum Betrieb in Abhängigkeit der Tiefen und/oder Breiten oder anderen geometrischen Dimensionen der Transporteinheiten ausgelegt sein.

Vorzugsweise ist die Steuerung eingerichtet, jeweils dem mindestens einen Ausdehnungsbereich einen Mitnehmerwert einer Anzahl von Mitnehmern zwischen zwei aufeinanderfolgenden Transporteinheiten im jeweiligen logischen Segment zuzuordnen und die Weichenvorrichtung ist eingerichtet, Transporteinheiten jeweils derart in den Taktförderer einzutakten, dass die Anzahl von Mitnehmern zwischen zwei aufeinanderfolgenden Transporteinheiten im logischen Segment dem zugeordneten Mitnehmerwert des Ausdehnungsbereichs entspricht.

Der Mitnehmerwert stellt daher die Anzahl von freien Mitnehmern zwischen mit Transporteinheiten besetzten bzw. zu besetzenden Mitnehmern dar. Dieser Mitnehmerwert kann von der Steuerung der Weichenvorrichtung übermittelt werden, so dass die Weichenvorrichtung die Transporteinheiten derart in ein jeweiliges logisches Segment des Taktförderers eintaktet, dass die Anzahl von freien Mitnehmern zwischen besetzten bzw. zu besetzenden Mitnehmern dem übermittelten Mitnehmerwert gemäss dem Ausdehnungsbereich entspricht. Zum Beispiel können Transporteinheiten mit Ausdehnungen, welche fünf freie Mitnehmer zwischen besetzten Mitnehmern erfordern, in logische Segmente des Taktförderers mit einem Ausdehnungsbereich eingetaktet werden, welchem ein Mitnehmerwert mit fünf freien Mitnehmern zugeordnet ist.

Ferner können durch eine geeignete Auswahl eines Ausdehnungsbereichs gemischte logische Segmente mit unterschiedlich ausgedehnten Transporteinheiten, aber aufgrund eines bestimmten Mitnehmerwertes mit gleichen Abständen zwischen aufeinanderfolgenden Transporteinheiten bereitgestellt werden.

Für Transporteinheiten mit vergleichsweise grossen Ausdehnungen kann daher ein logisches Segment mit einem Ausdehnungsbereich, welches grosse Ausdehnungswerte umfasst, bereitgestellt werden. In ein solches logisches Segment des Taktförderers können durch die Weichenvorrichtung Transporteinheiten mit vergleichsweise grossen Ausdehnungen eingetaktet werden, wobei die Mitnehmer mit Transporteinheiten vorteilhafterweise derart besetzt werden, dass eine ausreichende Anzahl von freien Mitnehmern dazwischenliegt und zwischen aufeinanderfolgenden Transporteinheiten ausreichend Platz zur Verfügung steht.

Bei vergleichsweise kleinen Ausdehnungen der Transporteinheiten hingegen, kann ein logisches Segment mit einem Ausdehnungsbereich, welcher kleine Ausdehnungswerte umfasst, bereitgestellt werden. In ein solches logisches Segment kann die Weichenvorrichtung die Transporteinheiten in kürzeren Takten, d.h. mit einer kleineren Anzahl von freien Mitnehmern zwischen besetzten bzw. zu besetzenden Mitnehmern, eintakten.

Insbesondere können somit überschüssige freie Mitnehmer, welche zur Sicherstellung eines ausreichenden Abstandes zwischen den Transporteinheiten nicht benötigt werden, reduziert oder vermieden werden, so dass mit angepassten Abständen zwischen den Transporteinheiten eine optimierte Auslastung des Taktförderers bereitgestellt werden kann.

Die erste Ermittlungsvorrichtung kann in Ausgestaltungen ein optischer Sensor, z.B. umfassend eine Lichtschranke, oder ein induktiver Sensor sein. in bestimmten Ausgestaltungen kann die erste Ermittlungsvorrichtung als eine Auslesevorrichtung ausgebildet sein, welcher die Ausdehnungsinformationen an der Transporteinheit, z.B. über einen an der Transporteinheit angeordneten Barcode oder RFID-Tag, oder von einer Datenbank, in welcher die Ausdehnungsinformationen von Transporteinheiten auf der Förderstrecke abgelegt sind, ausliest.

In einer vorteilhaften Ausgestaltung weist die Fördervorrichtung eine Mehrzahl von Förderstrecken auf, welche an verschiedenen Eintaktstellen an den Taktförderer angeschlossen sind. Durch die Steuerung und die Unterteilung des Taktförderers in logische Segmente kann erreicht werden, dass die Eintaktung von Transporteinheiten aus der Mehrzahl von Förderstrecken gemäss den jeweiligen Ausdehnungen der Transporteinheiten optimiert auf den Taktförderer verteilt wird.

In einer Ausgestaltung ist die Weichenvorrichtung eingerichtet, eine Transporteinheit in der Förderstrecke zurückzuhalten, wenn die ermittelte Ausdehnung der Transporteinheit an der Eintaktstelle ausserhalb des mindestens einen Ausdehnungsbereichs des logischen Segments an der Eintaktstelle liegt.

Auf diese Weise kann verhindert werden, dass Transporteinheiten mit einer ungeeigneten Ausdehnung in ein logisches Segment des Taktförderers eingetaktet werden. Zum Beispiel kann verhindert werden, dass eine Transporteinheit mit einer Ausdehnung, für welche zwischen zwei Transporteinheiten fünf freie Mitnehmer erforderlich sind, in ein logisches Segment mit einem Ausdehnungsbereich mit Ausdehnungswerten, für welche zwischen Transporteinheiten drei freie Mitnehmer vorgesehen sind, eingetaktet wird. Dadurch kann die Fehleranfälligkeit bei der Eintaktung reduziert werden.

Alternativ oder in Ergänzung kann zum Beispiel verhindert werden, dass eine Transporteinheit mit einer Ausdehnung, für welche zwischen zwei Transporteinheiten zwei freie Mitnehmer ausreichen, in ein logisches Segment mit einem Ausdehnungsbereich mit Ausdehnungswerten, für welche zwischen Transporteinheiten fünf freie Mitnehmer vorgesehen sind, eingetaktet wird. Dadurch kann die Förderkapazität optimiert werden, da die Anzahl unnötiger freier Mitnehmer reduziert werden kann.

In einer Ausgestaltung sind die Transporteinheiten auf der Förderstrecke mit veränderlichem Abstand zueinander förderbar.

insbesondere für die Eintaktung von Transporteinheiten von solchen Förderstrecken in einen Taktförderer ist die Erfindung vorteilhaft, da auf der Förderstrecke ungetaktete Transporteinheiten gemäss ihrer Ausdehnung optimal auf den Taktförderer verteilt werden können.

In einer Ausgestaltung weist die Förderstrecke bei der Eintaktstelle eine Krümmung auf.

Krümmungen der Förderstrecke bei einer Eintaktstelle können insbesondere in Fördervorrichtungen vorkommen, in welchen die Förderstrecke senkrecht zur Förderrichtung eines Abschnitts des Taktförderers, an welchen die Förderstrecke angeschlossen ist, angeordnet ist. Eine Krümmung der Förderstrecke bei einer Eintaktstelle kann dazu führen, dass der erforderliche Abstand zwischen aufeinanderfolgenden Transporteinheiten im Taktförderer erhöht wird. Vorzugsweise wird die Krümmung der Förderstrecke bei der Eintaktstelle von der Steuerung durch einen angepassten Ausdehnungsbereich und/oder einen angepassten Mitnehmerwert berücksichtigt.

Zum Beispiel kann die Steuerung dem Effekt einer Krümmung, insbesondere für Transporteinheiten ab einer bestimmten Mindestausdehnung, z.B. bei einer Mindesttiefe längs der Förderrichtung, welche das Doppelte der Breite der Transporteinheiten quer zur Förderrichtung beträgt, durch eine Reduktion der Ausdehnungswerte eines Ausdehnungsbereichs Rechnung tragen. Alternativ oder in Ergänzung kann die Steuerung den Mitnehmerwert eines Ausdehnungsbereichs erhöhen, um den Effekt einer Krümmung zu berücksichtigen.

In einer Ausgestaltung ist der Taktförderer als Umlaufförderer ausgebildet.

In einer Ausgestaltung ist der Taktförderer als Endlosförderer ausgebildet.

Der Umlaufförderer ist ein Förderer, mit welchem die Transporteinheiten in einem geschlossenen Umlauf bzw. Kreislauf gefördert werden können. An verschiedenen Stellen des Umlaufförderers können dabei betätigbare oder schaltbare Weichenvorrichtungen vorgesehen werden, welche ein gezieltes Einfahren von Transporteinheiten in den Umlauf bzw. ein Ausfahren von im Umlauf zirkulierenden Transporteinheiten ermöglichen. Insbesondere können am Umlaufförderer, z.B. innerhalb des Umlaufförderers, Förderstrecken über Weichenvorrichtungen angeschlossen sein.

In einer Ausgestaltung weist der Taktförderer einen Initiator auf, welcher eingerichtet ist, einen ersten Mitnehmer, vorzugsweise zyklisch, einem ersten logischen Segment zuzuordnen.

Durch den Initiator kann mit dem ersten Mitnehmer ein Nullpunkt derart festgelegt werden, so dass die Steuerung die Position aller Mitnehmer im Taktförderer identifizieren und nachverfolgen kann. Entsprechend kann die Steuerung die identifizierten Mitnehmer den logischen Segmenten zuordnen. Am Taktförderer kann insbesondere ein Drehgeber zur Identifikation der Mitnehmer angeordnet sein. Weiter bietet der Initiator den Vorteil, dass die Identifikation der Mitnehmer, in einem Umlaufförderer vorzugsweise zyklisch, überprüft werden kann. Bei Abweichungen von der ursprünglichen Identifikation, z.B. aufgrund von Verschiebungen innerhalb oder zwischen logischen Segmenten, kann der Initiator eine neue Zuordnung eines ersten Mitnehmers zu einem logischen Segment im Sinne einer Eichung vornehmen. Solche Verschiebungen können z.B. durch Kettenspannungen, Haltevorgänge, Rückwärtsläufe etc. hervorgerufen werden.

In einer Ausgestaltung weisen die Transporteinheiten jeweils eine Aufnahmeeinheit auf, wobei die Ausdehnung der Transporteinheiten durch die Ausdehnung der Aufnahmeeinheiten, vorzugsweise in Förderrichtung, bestimmt wird.

Die Aufnahmeeinheiten können Taschen, Behälter, Körbe, Schachteln, Transportträger o.ä. sein.

In einer bevorzugten Ausgestaltung sind die Aufnahmeeinheiten als Taschen ausgebildet, wobei z.B. die Tiefe der Taschen in Förderrichtung durch das aufgenommene Transportgut bestimmt sein kann. Zum Beispiel können die Taschen zusammenfaltbar ausgebildet sein, so dass die Taschen in einer leeren Konfiguration eine kleine Tiefe aufweisen. Durch Aufnahme eines grossen Transportguts kann die Tasche aufgeklappt werden, so dass die Tiefe erhöht wird. Die erste Ermittlungsvorrichtung kann die Tiefe der gefüllten Taschen an der Eintaktstelle ermitteln und der Steuerung oder der Weichenvorrichtung übermitteln.

In einer Ausgestaltung weisen die Transporteinheiten jeweils einen Laufwagen auf, an welchem die Aufnahmeeinheiten jeweils befestigbar sind, wobei die Laufwagen mit den Mitnehmern des Taktförderers, vorzugsweise über einen Stift, in Eingriff bringbar sind.

Die Förderstrecke kann eine Laufschiene umfassen, in welcher die Laufwagen unabhängig und mit veränderlichem Abstand zueinander förderbar sind.

Die Transporteinheiten können in Ausgestaltungen Trolleys aufweisen, welche jeweils an einem oder zwei Laufwagen angebracht sind.

An den Trolleys können Taschen, Gerüste, Klammern, Gitter, Wannen, Körbe etc. angebracht sein.

In einer Ausgestaltung ist die Steuerung eingerichtet, den logischen Segmenten halboffene Ausdehnungsbereiche zuzuordnen, welche durch eine Maximalausdehnung oder durch eine Minimalausdehnung begrenzt sind.

In einer Ausgestaltung ist an der Förderstrecke eine Aufgabestation angeordnet, welche eingerichtet ist, die Transporteinheiten mit Transportgütern zu bestücken.

In einer Variante wird durch die Aufgabestation bei der Bestückung einer Transporteinheit mit einem Transportgut eine Ausdehnung zugeordnet und der ersten Ermittlungsvorrichtung übermittelt. Die Ausdehnung kann durch eine am Transportgut angeordnete Information, wie z.B. ein Barcode oder ein RFID-Tag, oder eine in der Aufgabenstation hinterlegte Information über die Transportgüter bestimmt sein.

Vorzugsweise ist die erste Ermittlungsvorrichtung nach der Aufgabestation angeordnet und eingerichtet, die Ausdehnung der bestückten Transporteinheiten zu ermitteln.

An einer Förderstrecke können auch mehrere Aufgabestationen angeordnet sein, welche jeweils die Transporteinheiten mit Transportgütern bestücken. Vorzugsweise ist die erste Ermittlungsvorrichtung in einem solchen Fall nach der letzten Aufgabestation angeordnet, um die Ausdehnung einer Transporteinheit nach der letzten Bestückung zu ermitteln.

In einer Ausgestaltung ist nach der Eintaktstelle am Taktförderer ein Sensor angeordnet, welcher mit der Steuerung verbunden und eingerichtet ist, die Anzahl und/oder Position von Transporteinheiten in einem logischen Segment zu ermitteln.

Durch den Sensor kann bestimmt werden, ob eine spezifische Unterteilung des Taktförderers in logische Segmente oder die Festlegung oder Zuordnung der Ausdehnungsbereiche oder die Zuordnung der Mitnehmerwerte optimal ist. Stellt der Sensor zum Beispiel fest, dass ein logisches Segment wenig oder keine Transporteinheiten von der Eintaktstelle weg fördert, kann dies ein Hinweis darauf sein, dass z.B. die spezifische Unterteilung in logische Segmente oder die Festlegung oder Zuordnung der Ausdehnungsbereiche oder die Zuordnung der Mitnehmerwerte nicht optimal ist.

Vorzugsweise ist der Sensor eingerichtet, die Anzahl und/oder Position der Transporteinheiten in einem logischen Segment an die Steuerung zu übermitteln und die Steuerung ist eingerichtet, die Unterteilung des Taktförderers in logische Segmente oder die den logischen Segmenten jeweils zugeordneten Ausdehnungsbereiche in Abhängigkeit der vom Sensor ermittelten Anzahl und/oder Position Transporteinheiten zu ändern.

Weiter kann die Steuerung die Mitnehmerwerte oder die Zuordnung der Mitnehmerwerte anpassen, um eine bessere Auslastung der logischen Segmente zu erreichen.

In einer Ausgestaltung weist der Taktförderer eine Kette mit Kettengliedern auf, an welchen die Mitnehmer angeordnet sind.

Insbesondere können die Transportgüter im Taktförderer an einzelnen Laufwagen hängend entlang einer Laufschiene transportiert werden, wobei die Laufwagen im Taktförderer durch eine parallel zur Laufschiene in einer eigenen Schiene geführte, angetriebene Förderkette bewegt werden, die mit den Laufwagen in lösbarem Eingriff steht. Geeignete Laufwagen und Laufschienen sind beispielsweise in der WO2016/030275 A1 beschrieben und offenbart. Es ist aber auch denkbar, eine Förderkette seitlich anzuordnen, wie dies in der WO2016/030273 A1 gezeigt ist.

In einer Ausgestaltung ist an der Förderstrecke vor der Weichenvorrichtung eine zweite Ermittlungsvorrichtung angeordnet, welcher mit der Steuerung verbunden und eingerichtet ist, die Ausdehnung der Transporteinheiten vor der Weichenvorrichtung zu ermitteln und mit der durch die erste Ermittlungsvorrichtung ermittelten Ausdehnung zu vergleichen.

Mit der zweiten Ermittlungsvorrichtung kann die durch die erste Ermittlungsvorrichtung ermittelte Ausdehnung überprüft werden. Dies kann vorteilhaft sein, wenn sich ein Transportgut entlang der Förderstrecke in der Transporteinheit bewegt und sich so die Ausdehnung der Transporteinheit ändert. Bei einer Tasche kann dies z.B. der Fall sein, falls ein Transportgut in der Tasche kippt oder schwenkt. Eine Überprüfung der Ausdehnung kann auch vorteilhaft sein, falls sich die Transporteinheit selbst, z.B. durch Rotation, entlang der Förderstrecke dreht oder sich unbeabsichtigt entleert.

In einer Ausgestaltung ist die erste Ermittlungsvorrichtung eingerichtet, die Tiefe einer Transporteinheit längs der Förderrichtung und/oder die Breite einer Transporteinheit quer zur Förderrichtung zu ermitteln, und die Steuerung ist eingerichtet, den logischen Segmenten Ausdehnungsbereiche für die Tiefen und/oder Breiten zuzuordnen.

In einer Ausgestaltung ist die Steuerung eingerichtet, mindestens einem logischen Segment mindestens zwei disjunkte Ausdehnungsbereiche zuzuordnen.

Durch die Zuordnung von disjunkten Ausdehnungsbereichen können insbesondere gemischte logische Segmente mit unterschiedlichen Abständen zwischen aufeinanderfolgenden Transporteinheiten bereitgestellt werden. Ferner können den disjunkten Ausdehnungsbereichen unterschiedliche Mitnehmerwerte zugeordnet werden. Optional werden den disjunkten Ausdehnungsbereichen zusätzliche Zwischenmitnehmerwerte zugeordnet, wobei die Weichenvorrichtung eingerichtet ist, bei aufeinanderfolgenden Transporteinheiten mit unterschiedlichen Ausdehnungen die Transporteinheiten derart einzutakten, dass zwischen den aufeinanderfolgenden Transporteinheiten mit unterschiedlichen Ausdehnungen die Anzahl der dazwischenliegenden freien Mitnehmer einem Zwischenmitnehmerwert entspricht.

In einer Ausgestaltung ist die Steuerung eingerichtet, mindestens einen disjunkten Ausdehnungsbereich für die Tiefen der Transporteinheiten längs der Förderrichtung und mindestens einen disjunkten Ausdehnungsbereich für die Breiten der Transporteinheiten quer zur Förderrichtung vorzusehen, wobei die Steuerung vorzugsweise eingerichtet ist, den Ausdehnungsbereichen einen Identifikator zur Kennzeichnung des jeweiligen Ausdehnungsbereiches für Tiefen oder Breiten zuzuordnen. Vorzugsweise ist die Weichenvorrichtung eingerichtet, den Identifikator auszulesen und den passenden Ausdehnungsbereich mit der Tiefe oder der Breite zu vergleichen.

Die Erfindung betrifft weiter ein Verfahren zum Betrieb einer Fördervorrichtung gemäss der vorliegenden Erfindung, umfassend die Schritte: i) Bereitstellen von Transporteinheiten in einer Förderstrecke; ii) Unterteilen des Taktförderers in logische Segmente durch die Steuerung; iii) Zuordnen von mindestens einem Ausdehnungsbereich zu jeweils einem logischen Segment durch die Steuerung; iv) Ermitteln der Ausdehnung der Transporteinheiten entlang der Förderrichtung durch die erste Ermittlungsvorrichtung; v) Übermitteln der ermittelten Ausdehnung an die Steuerung oder die Weichenvorrichtung; vi) Vergleichen der ermittelten Ausdehnung einer Transporteinheit an der Eintaktstelle mit dem mindestens einen Ausdehnungsbereich eines logischen Segments an der Eintaktstelle; vii) Eintakten der Transporteinheit von der Förderstrecke in den Taktförderer durch die Weichenvorrichtung, wenn die ermittelte Ausdehnung im mindestens einen Ausdehnungsbereich des logischen Segments liegt.

Dem Fachmann ist klar, dass die Schritte des Verfahrens nicht zwingend konsekutiv in der beschriebenen Reihenfolge ausgeführt werden müssen.

In einer Ausgestaltung ordnet die Steuerung jeweils dem mindestens einen Ausdehnungsbereich einen Mitnehmerwert einer Anzahl von Mitnehmern zwischen zwei aufeinanderfolgenden Transporteinheiten im jeweiligen logischen Segment zu und die Weichenvorrichtung taktet die Transporteinheiten jeweils derart in den Taktförderer ein, dass die Anzahl von Mitnehmern zwischen zwei aufeinanderfolgenden Transporteinheiten im logischen Segment dem zugeordneten Mitnehmerwert des Ausdehnungsbereichs entspricht.

### LISTE DER FIGUREN

Ausführungsformen der Erfindung werden anhand der nachfolgenden Figuren und der dazugehörigen Beschreibung näher erläutert. Es zeigen:
- Fig. 1: eine schematische Darstellung einer Ausführungsform einer Förder-vorrichtung;
- Fig. 2: eine schematische Darstellung einer weiteren Ausführungsform einer Fördervorrichtung;
- Fig. 3: eine vergrösserte Darstellung der Fördervorrichtung aus Figur 1 im Bereich von zwei Eintaktstellen;
- Fig. 4a-b: perspektivische Ansichten einer Ausführungsform einer Transport-einheit, welche hängend an einer Laufschiene förderbar ist;
- Fig. 5: eine perspektivische Ansicht eines Ausschnitts einer Ausführungs-form eines Taktförderers;
- Fig. 6: eine schematische Darstellung der Fördervorrichtung aus Fig. 2 mit Transporteinheiten mit unterschiedlichen Tiefen sowie unterschiel-dichen Breiten.

### BESCHREIBUNG EXEMPLARISCHER AUSFÜHRUNGSFORMEN

Um die Erfindung zu veranschaulichen, werden bevorzugte Ausführungsformen mit Bezug auf die Figuren näher beschrieben.

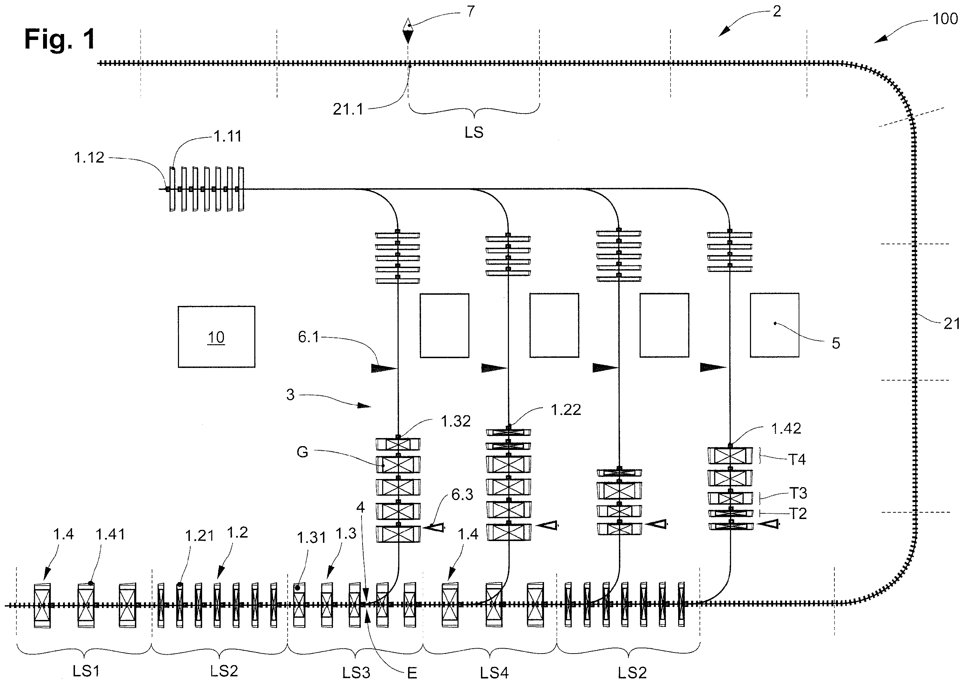

Figur 1 zeigt eine schematische Darstellung einer Ausführungsform einer Fördervorrichtung 100 umfassend eine Mehrzahl von Transporteinheiten 1.1, 1.2, 1.3, 1.4, einen Taktförderer 2 zum getakteten Fördern der Transporteinheiten 1.1-1.4 mit einer Mehrzahl von Mitnehmern 21, welche jeweils mit einer Transporteinheit lösbar verbindbar sind. Die Transporteinheiten 1.1-1.4 umfassen Taschen 1.11-1.41, welche an Laufwagen 1.12-1.42 befestigt sind und welche ein Transportgut G aufnehmen können. Die Transportgüter G weisen unterschiedliche Ausdehnungen auf, welche nach der Bestückung der Taschen 1.11 zu unterschiedlichen Ausdehnungen T2, T3, T4 der Transporteinheiten 1.1-1.4 führen. In der vorliegenden Ausführungsform stellen die Ausdehnungen T2, T3, T4 die Tiefen der Transporteinheiten in Förderrichtung dar. Die Fördervorrichtung 100 umfasst weiter vier Förderstrecken 3 und vier Weichenvorrichtungen 4, über welche die Förderstrecken 3 jeweils an einer Eintaktstelle E an den Taktförderer 2 angeschlossen sind. Die Förderstrecken 3 sind senkrecht zur Förderrichtung des Abschnitts des Taktförderers 2, an welchen die Förderstrecken 3 angeschlossen sind angeordnet und weisen an den Eintaktstellen E eine Krümmung auf.

Die Transporteinheiten 1.1-1.4 sind in den Förderstrecken 3 unabhängig und mit veränderlichem Abstand zueinander förderbar. An den Förderstrecken 3 ist jeweils eine Aufgabestation 5 angeordnet, welche die leeren Taschen 1.11 der Transporteinheiten 1.1 mit den Transportgütern G bestücken. Nach den Aufgabestationen 5 ist jeweils an den Förderstrecken 3 eine erste Ermittlungsvorrichtung 6.1 angeordnet, welcher die Ausdehnungen T2-T4 der Transporteinheiten 1.2-1.4 ermittelt. Weiter stromabwärts ist an den Förderstrecken 3 jeweils vor den Eintaktstellen E eine zweite Ermittlungsvorrichtung 6.3 angeordnet, welcher die Ausdehnungen T2-T4 der Transporteinheiten 1.2-1.4 überprüft.

Der Taktförderer 2 ist durch eine Steuerung 10 in logische Segmente LS, LS1, LS2, LS3, LS4 etc. unterteilt, welche durch gestrichelte Linien symbolisiert sind. Den logischen Segmente LS1 und LS4 sind Ausdehnungsintervalle zugeordnet, in welche die Ausdehnungen T4 der dicksten Transporteinheiten 1.4 fallen. Dem logischen Segment LS2 ist ein Ausdehnungsintervall zugeordnet, in welches die Ausdehnungen T2 der dünnsten Transporteinheiten 1.2 fallen. Dem logischen Segment LS3 ist ein Ausdehnungsintervall zugeordnet, in welches die Ausdehnungen T3 von mitteldicken Transporteinheiten 1.3 fallen. Die Weichenvorrichtung 4 taktet die Transporteinheiten 1.2-1.4 derart in den Taktförderer 2 ein, dass die logischen Segmente LS1-LS4 jeweils Transporteinheiten 1.2-1.4 mit unterschiedlichen Ausdehnungen T2-T4 fördern, welche den jeweiligen Ausdehnungsintervallen der logischen Segmente LS1 -LS4 entsprechen.

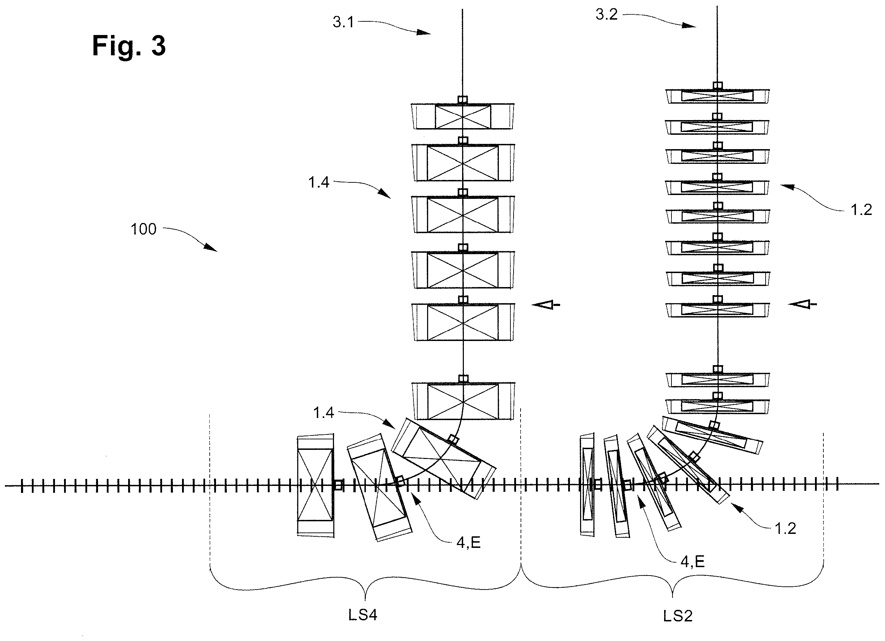

Wie weiter in der Figur 1 ersichtlich, ist den Ausdehnungsintervallen jeweils ein Mitnehmerwert zugeordnet, so dass die Anzahl von freien Mitnehmern zwischen aufeinanderfolgenden besetzten Mitnehmern für die jeweiligen logischen Segmente LS1-LS4 definiert und je nach der Ausdehnung T2-T4 der geförderten Transporteinheiten 1.2-1.4 unterschiedlich ist. Die Anzahl von freien Mitnehmern ist auf die Ausdehnung T2-T4 der Transporteinheiten optimiert und nimmt mit steigender Ausdehnung T2-T4 der Transporteinheiten 1.2-1.4 zu. Aus der Figur 1 ist ersichtlich, dass die logischen Segmente LS1-LS4 jeweils Transporteinheiten mit einer definierten Ausdehnung fördern, obwohl die Transporteinheiten 1.2-1.4 gemischt auf Förderstrecken 3 zugeführt werden. Die Mitnehmerwerte der logischen Segmente LS1-LS4 sind derart definiert, dass der Abstand zwischen aufeinanderfolgenden Transporteinheiten 1.2-1.4 auf die Kurvenführung in der Krümmung der Förderstrecken 3 an den Eintaktstellen E angepasst ist, wie genauer weiter unten zu Figur 3 ausgeführt wird. Am Taktförderer 2 ist ferner ein Initiator 7 angeordnet, welcher einen ersten Mitnehmer 21.1 einem ersten logischen Segment LS zuordnet.

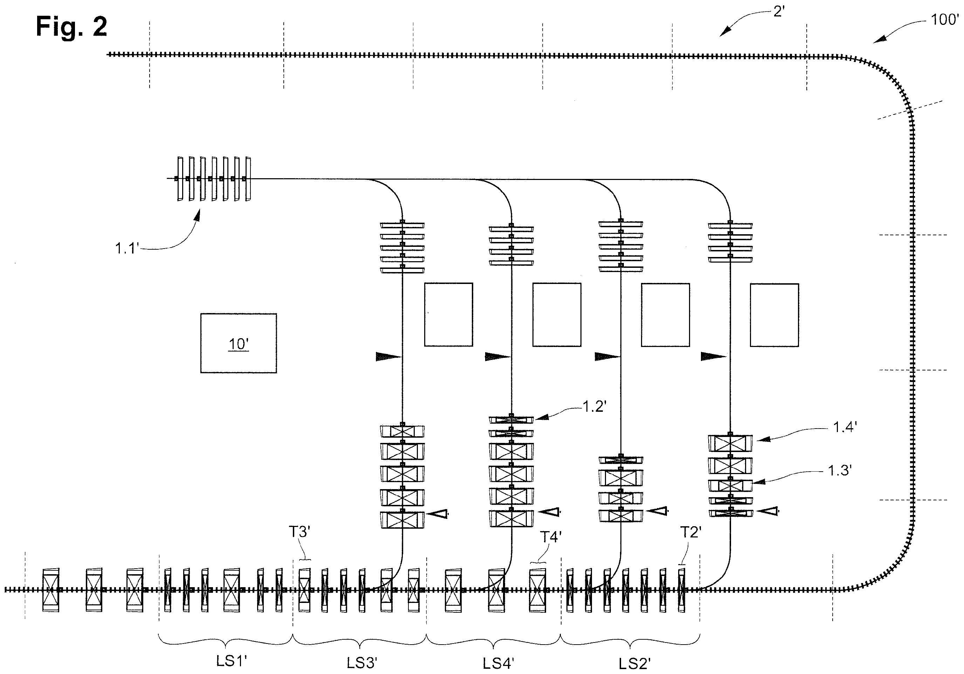

Figur 2 zeigt eine weitere Ausführungsform einer Fördervorrichtung 100' mit Transporteinheiten 1.1', 1.2', 1.3', 1.4'. Der Taktförderer 2' ist durch die Steuerung 10' in logische Segmente LS1', LS2', LS3', LS4' unterteilt. Förderstrecken, Aufnahmestationen, erste und zweite Ermittlungsvorrichtungen sind analog zur Ausführungsform gemäss Figur 1 ausgebildet. Dem logischen Segment LS2' ist ein Ausdehnungsbereich zugeordnet, in welches die Ausdehnungen T2' der dünnsten Transporteinheiten 1.2' fallen. Dem logischen Segment LS4' ist ein Ausdehnungsbereich zugeordnet, in welches die Ausdehnungen T4' der dicksten Transporteinheiten 1.4' fallen. Im Unterschied zur in Figur 1 gezeigten Ausführungsform sind den logischen Segmenten LS1', LS3' jeweils mindestens zwei disjunkte Ausdehnungsbereiche zugeordnet, so dass gemischte logische Segmente LS1', LS3' mit unterschiedlich dicken Transporteinheiten 1.2'-1.4' und unterschiedlichen Abständen bzw. unterschiedlich vielen freien Mitnehmern zwischen den Transporteinheiten 1.2'-1.4' gebildet werden. Dem logischen Segment LS1' ist ein erster Ausdehnungsbereich zugeordnet, in welches die Ausdehnungen T2' der dünnsten Transporteinheiten 1.2' fallen. Weiter ist dem logischen Segment LS1' ein disjunkter zweiter Ausdehnungsbereich zugeordnet, in welches die Ausdehnungen T4' der dicksten Transporteinheiten 1.4' fallen. Die Ausdehnung T3' der mitteldicken Transporteinheiten 1.3' fallen in einen disjunkten dritten Ausdehnungsbereich, welcher dem logischen Segment LS1' zugeordnet ist.

Dem ersten und dem zweiten Ausdehnungsbereich des logischen Segments LS1' sind jeweils erste und zweite Mitnehmerwerte zugeordnet, welche die Anzahl freier Mitnehmer zwischen von dünnen Transporteinheiten 1.2' besetzten Mitnehmern und zwischen von dicken Transporteinheiten 1.4' besetzten Mitnehmern bestimmen. Ferner sind den ersten und zweiten Ausdehnungsbereichen zusätzliche Zwischenmitnehmerwerte zugeordnet, welche die Anzahl freier Mitnehmer zwischen einem von einer dünnen Transporteinheit 1.2' besetzten Mitnehmer und einem von einer dicken Transporteinheit 1.4' besetzten Mitnehmer bestimmt. Den dritten Ausdehnungsbereichen sind entsprechend dritte Mitnehmerwerte sowie zusätzliche Zwischenmitnehmerwerte zugeordnet.

In analoger Weise sind dem logischen Segment LS3' zwei disjunkte Ausdehnungsbereiche für die Ausdehnungen T2' der dünnsten Transporteinheiten 1.2' und für die Ausdehnungen T3' von mitteldicken Transporteinheiten 1.3' zugeordnet. Die Ausdehnungen T4' der dicksten Transporteinheiten 1.4' können für das logische Segment LS3' in einen disjunkten dritten Ausdehnungsbereich fallen. Je nach auftretenden Ausdehnungen der Transporteinheiten können den logischen Segmenten weitere disjunkte Ausdehnungsbereiche zugeordnet sein.

Figur 3 zeigt eine vergrösserte Darstellung der Fördervorrichtung 100 aus Figur 1 im Bereich von zwei Eintaktstellen E. Zur besseren Übersicht sind auf der Förderstrecke 3.1 ausser der hintersten Transporteinheit ausschliesslich dicke Transporteinheiten 1.4 und auf der Förderstrecke 3.2 ausschliesslich dünne Transporteinheiten 1.2 gezeigt. Wie in der Figur 3 ersichtlich, ist aufgrund der Kurvenführungen in den Krümmungen der Förderstrecken 3.1, 3.2 bei den Eintaktstellen E zwischen den dicken Transporteinheiten 1.4 ein grösserer Abstand erforderlich als zwischen den dünnen Transporteinheiten 1.2. Entsprechend sind die Mitnehmerwerte der logischen Segmente LS4, LS2 angepasst, um die aufgrund der Krümmungen erforderlichen Abstände aufzunehmen.

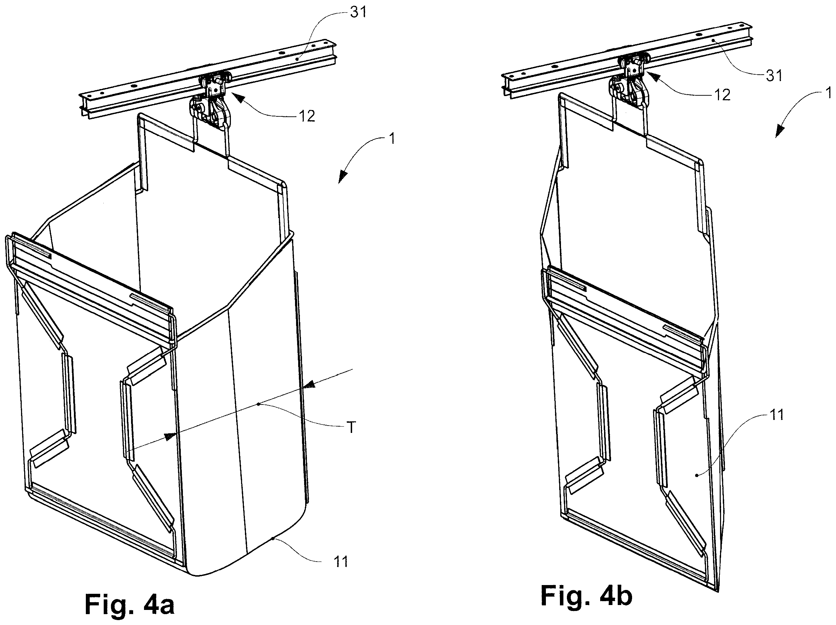

Figuren 4a und 4b zeigen perspektivische Ansichten einer Ausführungsform einer Transporteinheit 1, welche hängend an einer Laufschiene 31 förderbar ist. Die Transporteinheit 1 umfasst eine Tasche 11, welche an einem Laufwagen 1 2 befestigt ist. Der Laufwagen 12 ist unabhängig von anderen Laufwagen mit veränderlichem Abstand zu diesen in der Laufschiene 31 förderbar. Figur 4b zeigt eine zusammengeklappte Tasche 11 vor der Bestückung mit einem Transportgut. Figur 4a zeigt die Tasche 11 nach der Bestückung mit einem Transportgut, so dass die Ausdehnung der Tasche 11 in Förderrichtung die Tiefe T der Transporteinheit 1 bestimmt.

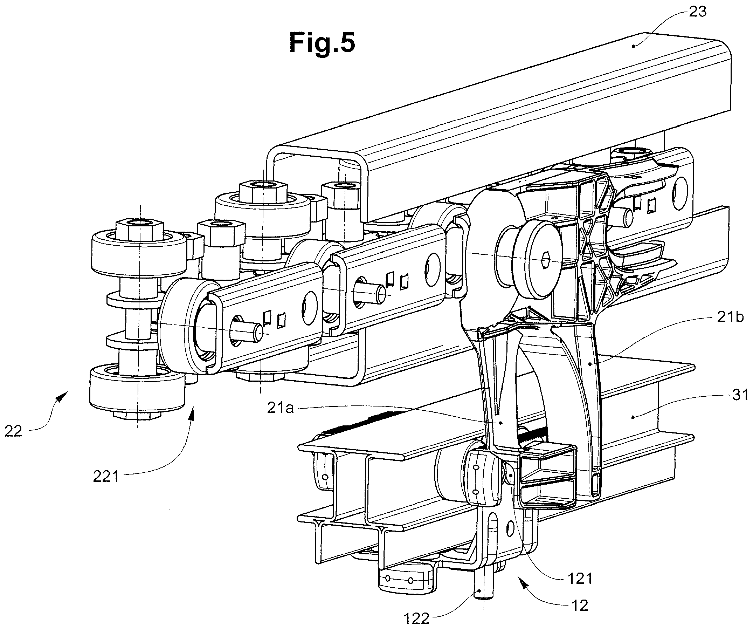

Figur 5 zeigt eine perspektivische Ansicht eines Ausschnitts einer Ausführungsform eines Taktförderers 2. Der Taktförderer 2 umfasst eine Förderkette 22, die mit ihren Kettengliedern 221 in einer Schiene 23 geführt ist. Unterhalb der Schiene 23 der Förderkette 22 ist parallel eine Laufschiene 31 gehalten, in der einzelne Laufwagen 12 beweglich gelagert sind. Die Kettenglieder 221 der Förderkette 22 stehen über nach unten herausstehende Mitnehmer 21a, 21b und einen Stift 121 am Laufwagen 12 in Eingriff mit den Laufwagen 12, sodass eine fördernde Bewegung der Förderkette 22 eine entsprechende Bewegung der in Eingriff stehenden Laufwagen 12 bewirkt. An jedem der Laufwagen 12 ist ein Verbindungselement 122 vorgesehen, mittels dessen eine Aufnahmeeinheit, wie z.B. eine Tasche, am Laufwagen 12 hängend befestigt werden kann.

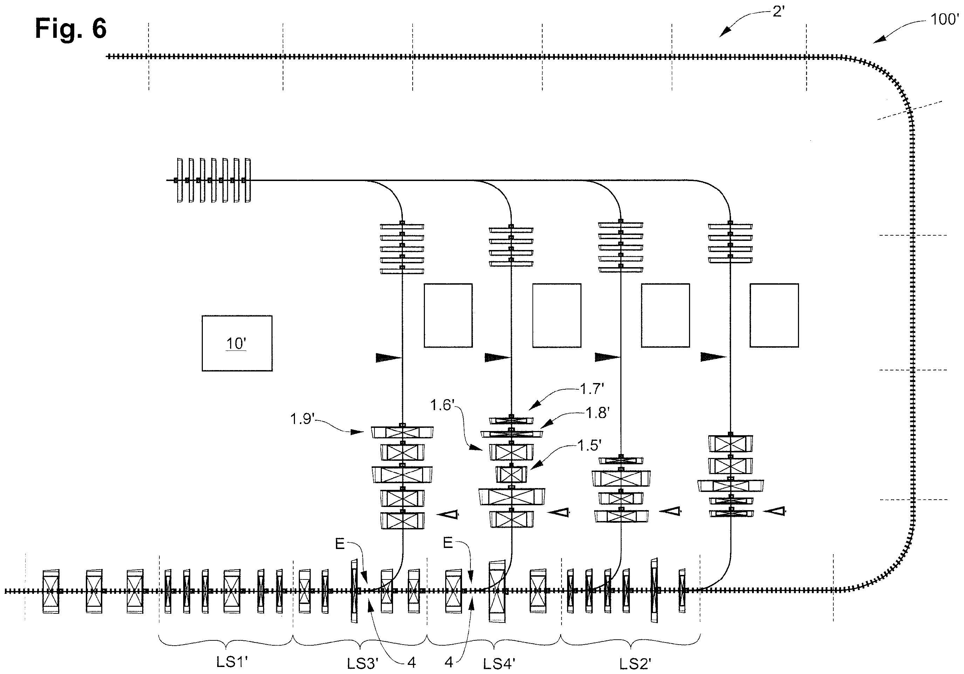

Figur 6 zeigt eine schematische Darstellung der Fördervorrichtung aus Figur 2, wobei in der Fördervorrichtung Transporteinheiten 1.5'-1.9' gefördert werden, wobei die unterschiedlichen Ausdehnungen der Transporteinheiten 1.5'-1.9' sowohl die Tiefen der Transporteinheiten 1.5'-1.9' in Förderrichtung als auch die Breiten der Transporteinheiten 1.5'-1.9' quer zur Förderrichtung umfassen. In der Figur sind eine schmalste Transporteinheit 1.5' und breiteste Transporteinheiten 1.8', 1.9' sowie Transporteinheiten 1.6', 1.7' mit mittleren Breiten quer zur Förderrichtung bezeichnet. Die breitesten Transorteinheiten 1.8', 1.9' weisen zwar eine gleiche Breite quer zur Förderrichtung, aber unterschiedliche Tiefen längs der Förderrichtung auf. Ähnlich verhält es sich mit den mittelbreiten Transporteinheiten 1.6', 1.7', welche zwar eine gleiche Breite quer zur Förderrichtung, aber unterschiedliche Tiefen längs der Förderrichtung aufweisen. Den logischen Segmenten sind zusätzlich zu den Ausdehnungsbereichen, in welche die Tiefen der Transporteinheiten fallen und welche zu Figur 2 bereits beschrieben wurden, disjunkte Ausdehnungsbereiche für die Breiten der Transporteinheiten zugeordnet. Auf diese Weise können gemischte logische Segmente, in welchen Transporteinheiten mit sowohl unterschiedlichen Tiefen als auch unterschiedlichen Breiten förderbar sind, bereitgestellt werden. Die Unterteilung in die logischen Segmente ist derart vorgenommen, dass eine optimierte Eintaktung in den Taktförderer bereitgestellt wird, welche sowohl die Tiefen und Breiten der Transporteinheiten, als auch die Krümmungen der Förderstrecken an den Eintakstellen E berücksichtigt.

In Figur 6 sind gemischte logische Segmente exemplarisch für die logischen Segmente LS2'-LS4' gezeigt. Dem logischen Segment LS2' ist für die Tiefe der Transporteinheiten ein Ausdehnungsbereich zugeordnet, in welchen die Tiefen der dünnsten Transporteinheiten fallen. Zusätzlich sind dem logischen Segment LS2' mindestens zwei disjunkte Ausdehnungsbereiche für die Breiten der Transporteinheiten zugeordnet, in welchen, wie in der Figur gezeigt, z.B. die Breiten der mittelbreiten sowie breitesten Transporteinheiten fallen. Dem logischen Segment LS4' ist für die Tiefe der Transporteinheiten ein Ausdehnungsbereich zugeordnet, in welchen die Tiefen der dicksten Transporteinheiten fallen, sowie zusätzlich mindestens zwei disjunkte Ausdehnungsbereiche für die Breiten der Transporteinheiten. Dem logischen Segment LS3' sind mindestens zwei disjunkte Ausdehnungsbereiche sowohl für die Tiefen der Transporteinheiten als auch für die Breiten der Transporteinheiten zugeordnet, so dass ein sowohl hinsichtlich der Tiefen als auch hinsichtlich der Breiten gemischtes logisches Segment LS3' entsteht. Den Ausdehnungsbereichen für die Tiefen und für die Breiten ist in der Steuerung 10' ein Identifikator zugeordnet, welcher jeweils kennzeichnet, ob ein Ausdehnungsbereich eine Tiefe oder eine Breite einer Transporteinheit betrifft. Die Weichenvorrichtungen 4 sind eingerichtet, den Identifikator auszulesen und den passenden Ausdehnungsbereich mit der Tiefe oder der Breite zu vergleichen.

## Patentansprüche

1. Fördervorrichtung (100, 100') zum Eintakten von Transporteinheiten (1, 1.1-1.4, 1.1'-1.9'), umfassend eine Mehrzahl von Transporteinheiten, einen Taktförderer (2, 2') zum getakteten Fördern der Transporteinheiten, der Taktförderer umfassend eine Mehrzahl von Mitnehmern (21, 21.1, 21a-b), welche jeweils mit einer Transporteinheit lösbar verbindbar sind, mindestens eine Förderstrecke (3, 3.1, 3.2) und eine Weichenvorrichtung (4), über welche die Förderstrecke an einer Eintaktstelle (E) an den Taktförderer angeschlossen ist, und welche eingerichtet ist, die Transporteinheiten an der Eintaktstelle in den Taktförderer einzutakten, **dadurch gekennzeichnet, dass** an der Förderstrecke (3, 3.1, 3.2) eine erste Ermittlungsvorrichtung (6.1) angeordnet ist, welche eingerichtet ist, jeweils die Ausdehnung (T, T2-T4, T2'-T4') einer Transporteinheit (1, 1.1-1.4, 1.1'-1.9') zu ermitteln, und die Fördervorrichtung (100, 100') eine Steuerung (10, 10') aufweist, welche mit der ersten Ermittlungsvorrichtung und mit der Weichenvorrichtung (4) verbunden und eingerichtet ist, den Taktförderer (2, 2') entlang der Förderrichtung in logische Segmente (LS, LS1-LS4, LS1 '-LS4') mit jeweils mindestens einem zugeordneten Ausdehnungsbereich zu unterteilen und die jeweilige ermittelte Ausdehnung einer Transporteinheit an der Eintaktstelle (E) mit dem mindestens einen Ausdehnungsbereich eines logischen Segments an der Eintaktstelle zu vergleichen, wobei die Weichenvorrichtung eingerichtet ist, eine Transporteinheit in den Taktförderer einzutakten, wenn die ermittelte Ausdehnung der Transporteinheit an der Eintaktstelle im mindestens einen Ausdehnungsbereich des logischen Segments an der Eintaktstelle liegt.

2. Fördervorrichtung (100, 100') nach Anspruch 1, **dadurch gekennzeichnet, dass** die Steuerung (10, 10') eingerichtet ist, jeweils dem mindestens einen Ausdehnungsbereich einen Mitnehmerwert einer Anzahl von Mitnehmern (21, 21.1, 21a-b) zwischen zwei aufeinanderfolgenden Transporteinheiten (1, 1.1-1.4, 1.1'-1.9') im jeweiligen logischen Segment (LS, LS1-LS4, LS1'-LS4') zuzuordnen und die Weichenvorrichtung (4) eingerichtet ist, Transporteinheiten (1, 1.1-1.4, 1.1'-1.9') jeweils derart in den Taktförderer (2, 2') einzutakten, dass die Anzahl von Mitnehmern (21,21.1, 21a-b) zwischen zwei aufeinanderfolgenden Transporteinheiten (1, 1.1-1.4, 1.1'-1.9') im logischen Segment (LS, LS1-LS4, LS1'-LS4') dem zugeordneten Mitnehmerwert des Ausdehnungsbereichs entspricht.

3. Fördervorrichtung (100, 100') nach Anspruch 1 oder 2, **dadurch gekennzeichnet, dass** die Weichenvorrichtung (4) eingerichtet ist, eine Transporteinheit (1, 1.1-1.4, 1.1'-1.9') in der Förderstrecke (3, 3.1, 3.2) zurückzuhalten, wenn die ermittelte Ausdehnung (T, T2-T4, T2'-T4') der Transporteinheit (1, 1.1-1.4, 1.1'-1.9') an der Eintaktstelle (E) ausserhalb des mindestens einen Ausdehnungsbereichs des logischen Segments (LS, LS1-LS4, LS1'-LS4') an der Eintaktstelle (E) liegt.

4. Fördervorrichtung (100, 100') nach einem der vorangehenden Ansprüche, **dadurch gekennzeichnet, dass** die Transporteinheiten (1, 1.1-1.4, 1.1'-1.9') auf der Förderstrecke (3, 3.1, 3.2) mit veränderlichem Abstand zueinander förderbar sind.

5. Fördervorrichtung (100, 100') nach einem der vorangehenden Ansprüche, **dadurch gekennzeichnet, dass** die Förderstrecke (3, 3.1, 3.2) bei der Eintaktstelle (E) eine Krümmung aufweist.

6. Fördervorrichtung (100, 100') nach einem der vorangehenden Ansprüche, **dadurch gekennzeichnet, dass** die Transporteinheiten (1, 1.1-1.4, 1.1'-1.9') jeweils eine Aufnahmeeinheit (11, 1.11-1.41) aufweisen, wobei die Ausdehnung (T, T2-T4, T2'-T4') der Transporteinheiten durch die Ausdehnung der Aufnahmeeinheiten (11 , 1.11-1.41), vorzugsweise in Förderrichtung, bestimmt wird.

7. Fördervorrichtung (100, 100') nach Anspruch 6, **dadurch gekennzeichnet, dass** die Transporteinheiten (1, 1.1-1.4, 1.1'-1.9') jeweils einen Laufwagen (12, 1.12-1.42) aufweisen, an welchem die Aufnahmeeinheiten (11, 1.11-1.41) jeweils befestigbar sind, wobei die Laufwagen (12, 1.12-1.42) mit den Mitnehmern (21,21.1, 21a-b) des Taktförderers (2, 2'), vorzugsweise über einen Stift (121), in Eingriff bringbar sind.

8. Fördervorrichtung (100, 100') nach einem der vorangehenden Ansprüche, **dadurch gekennzeichnet, dass** an der Förderstrecke (3, 3.1, 3.2) eine Aufgabestation (5) angeordnet ist, welche eingerichtet ist, die Transporteinheiten (1, 1.1-1.4, 1.1'-1.9') mit Transportgütern (G) zu bestücken.

9. Fördervorrichtung (100, 100') nach einem der vorangehenden Ansprüche, **dadurch gekennzeichnet, dass** nach der Eintaktstelle (E) am Taktförderer (2, 2') ein Sensor angeordnet ist, welcher mit der Steuerung (10, 10') verbunden und eingerichtet ist, die Anzahl und/oder Position von Transporteinheiten (1, 1.1-1.4, 1.1'-1.9') in einem logischen Segment (LS, LS1-LS4, LS1'-LS4') zu ermitteln.

10. Fördervorrichtung (100, 100') nach einem der vorangehenden Ansprüche, **dadurch gekennzeichnet, dass** der Taktförderer (2, 2') eine Kette (22) mit Kettengliedern (221) aufweist, an welchen die Mitnehmer (21, 21.1, 21a-b) angeordnet sind.

11. Fördervorrichtung (100, 100') nach einem der vorangehenden Ansprüche, **dadurch gekennzeichnet, dass** an der Förderstrecke (3, 3.1, 3.2) vor der Weichenvorrichtung (4) eine zweite Ermittlungsvorrichtung (6.3) angeordnet ist, welche mit der Steuerung (10, 10') verbunden und eingerichtet ist, die Ausdehnung (T, T2-T4, T2'-T4') der Transporteinheiten (1, 1.1-1.4, 1.1'-1.9') vor der Weichenvorrichtung (4) zu ermitteln und mit der durch die erste Ermittlungsvorrichtung (6.1) ermittelten Ausdehnung (T, T2-T4, T2'-T4') zu vergleichen.

12. Fördervorrichtung (100, 100') nach einem der vorangehenden Ansprüche, **dadurch gekennzeichnet, dass** die erste Ermittlungsvorrichtung (6.1) eingerichtet ist, die Tiefe (T, T2-T4, T2'-T4') einer Transporteinheit (1, 1.1-1.4, 1.1'-1.9') längs der Förderrichtung und/oder die Breite einer Transporteinheit (1, 1.1-1.4, 1.1'-1.9') quer zur Förderrichtung zu ermitteln, und die Steuerung (10, 10') eingerichtet ist, den logischen Segmenten (LS, LS1-LS4, LS1'-LS4') Ausdehnungsbereiche für die Tiefen (T, T2-T4, T2'-T4') und/oder Breiten zuzuordnen.

13. Fördervorrichtung (100, 100') nach einem der vorangehenden Ansprüche, **dadurch gekennzeichnet, dass** die Steuerung (10, 10') eingerichtet ist, mindestens einem logischen Segment (LS, LS1 -LS4, LS1'-LS4') mindestens zwei disjunkte Ausdehnungsbereiche zuzuordnen.

14. Verfahren zum Betrieb einer Fördervorrichtung (100, 100') nach einem der vorangehenden Ansprüche, umfassend die Schritte: i) Bereitstellen von Transporteinheiten (1, 1.1-1.4, 1.1'-1.9') in einer Förderstrecke (3, 3.1,3.2); ii) Unterteilen des Taktförderers (2, 2') in logische Segmente (LS, LS1-LS4, LS1'-LS4') durch die Steuerung (10, 10'); iii) Zuordnen von mindestens einem Ausdehnungsbereich zu jeweils einem logischen Segment (LS, LS1-LS4, LS1'-LS4') durch die Steuerung (10, 10'); iv) Ermitteln der Ausdehnung (T, T2-T4, T2'-T4') der Transporteinheiten (1, 1.1-1.4, 1.1'-1.9') durch die erste Ermittlungsvorrichtung; v) Übermitteln der ermittelten Ausdehnung (T, T2-T4, T2'-T4') an die Steuerung (10, 10') oder die Weichenvorrichtung (4); vi) Vergleichen der ermittelten Ausdehnung (T, T2-T4, T2'-T4') einer Transporteinheit (1, 1.1-1.4, 1.1'-1.9') an der Eintaktstelle (E) mit dem mindestens einen Ausdehnungsbereich eines logischen Segments (LS, LS1-LS4, LS1'-LS4') an der Eintaktstelle (E); vii) Eintakten der Transporteinheit (1, 1.1-14, 1.1'-1.9') von der Förderstrecke (3, 3.1, 3.2) in den Taktförderer (2, 2') durch die Weichenvorrichtung (4), wenn die ermittelte Ausdehnung (T, T2-T4, T2'-T4') im mindestens einen Ausdehnungsbereich liegt.

15. Verfahren nach Anspruch 14, **dadurch gekennzeichnet, dass** die Steuerung (10, 10') jeweils dem mindestens einen Ausdehnungsbereich einen Mitnehmerwert einer Anzahl von Mitnehmern (21, 21.1, 21a-b) zwischen zwei aufeinanderfolgenden Transporteinheiten (1, 1.1-1.4, 1.1'-1.9') im jeweiligen logischen Segment (LS, LS1-LS4, LS1'-LS4') zuordnet und die Weichenvorrichtung (4) die Transporteinheiten (1, 1.1-1.4, 1.1'-1.9') jeweils derart in den Taktförderer (2, 2') eintaktet, dass die Anzahl von Mitnehmern (21, 21.1, 21a-b) zwischen zwei aufeinanderfolgenden Transporteinheiten (1, 1.1-1.4, 1.1'-1.9') im logischen Segment (LS, LS1-LS4, LS1 '-LS4') dem zugeordneten Mitnehmerwert des Ausdehnungsbereichs entspricht.

## Claims

1. Conveying device (100, 100') for the clock-integration of transport units (1, 1.1-1.4, 1.1'-1.9'), comprising a plurality of transport units, an indexing conveyor (2, 2') for the clocked conveyance of the transport units, the indexing conveyor comprising a plurality of carriers (21, 21.1, 21a-b), which are respectively detachably connectable to a transport unit, at least one conveyor section (3, 3.1, 3.2), and a diverter (4), via which the conveyor section is connected at a clock-integration point (E) to the indexing conveyor and which is configured to clock-integrate the transport units at the clock-integration point into the indexing conveyor, **characterized in that** at the conveyor section (3, 3.1, 3.2) is arranged a first detection device (6.1), which is configured to respectively detect the extension (T, T2-T4, T2'-T4') of a transport unit (1, 1.1-1.4, 1.1'-1.9'), and the conveying device (100, 100') has a control system (10, 10'), which is connected to the first detection device and to the diverter (4) and is configured to divide the indexing conveyor (2, 2') along the direction of conveyance into logical segments (LS, LS1-LS4, LS1'-LS4') having respectively at least one assigned extension region and to compare the respective detected extension of a transport unit at the clock-integration point (E) with the at least one extension region of a logical segment at the clock-integration point, wherein the diverter is configured to clock-integrate a transport unit into the indexing conveyor when the detected extension of the transport unit at the clock-integration point lies in the at least one extension region of the logical segment at the clock-integration point.

2. Conveying device (100, 100') according to Claim 1, **characterized in that** the control system (10, 10') is configured to respectively assign to the at least one extension region a carrier value of a number of carriers (21, 21.1, 21a-b) between two successive transport units (1, 1.1-1.4, 1.1'-1.9') in the respective logical segment (LS, LS1-LS4, LS1'-LS4'), and the diverter (4) is configured to clock-integrate transport units (1, 1.1-1.4, 1.1'-1.9') respectively in such a way into the indexing conveyor (2, 2') that the number of carriers (21,21.1, 21a-b) between two successive transport units (1, 1 .1-1 .4, 1 .1'-1.9') in the logical segment (LS, LS1-LS4, LS1 '-LS4') corresponds to the assigned carrier value of the extension region.

3. Conveying device (100, 100') according to Claim 1 or 2, **characterized in that** the diverter (4) is configured to detain a transport unit (1, 1.1-1.4, 1.1'-1.9') in the conveyor section (3, 3.1, 3.2) when the detected extension (T, T2-T4, T2'-T4') of the transport unit (1, 1.1-1.4, 1.1'-1.9') at the clock-integration point (E) lies outside the at least one extension region of the logical segment (LS, LS1 -LS4, LS1 '-LS4') at the clock-integration point (E).

4. Conveying device (100, 100') according to one of the preceding claims, **characterized in that** the transport units (1, 1.1-1.4, 1.1'-1.9') are conveyable on the conveyor section (3, 3.1, 3.2) at a variable distance apart from each other.

5. Conveying device (100, 100') according to one of the preceding claims, **characterized in that** the conveyor section (3, 3.1, 3.2) at the clock-integration point (E) has a curvature.

6. Conveying device (100, 100') according to one of the preceding claims, **characterized in that** the transport units (1, 1.1 -1.4, 1.1'-1.9') respectively have a receiving unit (11, 1.11-1.41), wherein the extension (T, T2-T4, T2'-T4') of the transport units is defined by the extension of the receiving units (11, 1.11'-1.41), preferably in the direction of conveyance.

7. Conveying device (100, 100') according to Claim 6, **characterized in that** the transport units (1, 1.1-1.4, 1.1'-1.9') respectively have a carriage (12, 1.12-1.42) to which the receiving units (11, 1.11 -1 .41) can respectively be fastened, wherein the carriages (12, 1.1 2-1.42) can be brought into engagement with the carriers (21,21.1, 21a-b) of the indexing conveyor (2, 2'), preferably via a pin (1 21).

8. Conveying device (100, 100') according to one of the preceding claims, **characterized in that** at the conveyor section (3, 3.1, 3.2) is arranged an infeed station (5), which is configured to load the transport units (1, 1.1-1.4, 1.1'-1.9') with transport goods (G).

9. Conveying device (100, 100') according to one of the preceding claims, **characterized in that** after the clock-integration point (E) is arranged at the indexing conveyor (2, 2') a sensor, which is connected to the control system (10, 10') and configured to detect the number and/or position of transport units (1 , 1 .1-1.4, 1 .1'-1.9') in a logical segment (LS, LS1-LS4, LS1'-LS4').

10. Conveying device (100, 100') according to one of the preceding claims, **characterized in that** the indexing conveyor (2, 2') has a chain (22) having chain links (221) on which the carriers (21,21.1,21a-b) are arranged.

11. Conveying device (100, 100') according to one of the preceding claims, **characterized in that** at the conveyor section (3, 3.1, 3.2) before the diverter (4) is arranged a second detection device (6.3), which is connected to the control system (10, 10') and is configured to detect the extension (T, T2-T4, T2'-T4') of the transport units (1, 1.1-1.4, 1.1'-1 .9') before the diverter (4) and to compare this with the extension (T, T2-T4, T2'-T4') detected by the first detection device (6.1).

12. Conveying device (100, 100') according to one of the preceding claims, **characterized in that** the first detection device (6.1) is configured to detect the depth (T, T2-T4, T2'-T4') of a transport unit (1, 1.1-1.4, 1.1'-1.9') along the direction of conveyance and/orthe width of a transport unit (1, 1.1 -1 .4, 1 .1 '-1 .9') transversely to the direction of conveyance, and the control system (10, 10') is configured to assign to the logical segments (LS, LS1-LS4, LS1'-LS4') extension regions for the depths (T, T2-T4, T2'-T4') and/or widths.

13. Conveying device (100, 100') according to one of the preceding claims, **characterized in that** the control system (10, 10') is configured to assign to at least one logical segment (LS, LS1-LS4, LS1'-LS4') at least two disjunctive extension regions.

14. Method for operating a conveying device (100, 100') according to one of the preceding claims, comprising the steps: i) provision of transport units (1, 1.1-1.4, 1 .1'-1 .9') in a conveyor section (3, 3.1,3.2); ii) division of the indexing conveyor (2, 2') into logical segments (LS, LS1-LS4, LS1'-LS4') by the control system (10, 10'); iii) assignment of at least one extension region to respectively a logical segment (LS, LS1-LS4, LS1'-LS4') by the control system (10, 10'); iv) detection of the extension (T, T2-T4, T2'-T4') of the transport units (1, 1.1-1.4, 1.1'-1.9') by the first detection device; v) transmission of the detected extension (T, T2-T4, T2'-T4') to the control system (10, 10') or the diverter (4); vi) comparison of the detected extension (T,T2-T4, T2'-T4') of a transport unit (1, 1 .1-1 .4, 1 .1'-1.9') at the clock-integration point (E) with the at least one extension region of a logical segment (LS, LS1-LS4, LS1 '-LS4') at the clock-integration point (E); vii) clock-integration of the transport unit (1, 1.1-1.4, 1.1'-1.9') from the conveyor section (3, 3.1, 3.2) into the indexing conveyor (2, 2') by the diverter (4) when the detected extension (T, T2-T4, T2'-T4') lies in the at least one extension region.

15. Method according to Claim 14, **characterized in that** the control system (10, 10') respectively assigns to the at least one extension region a carrier value of a number of carriers (21, 21.1, 21a-b) between two successive transport units (1, 1.1-1.4, 1.1'-1.9') in the respective logical segment (LS, LS1-LS4, LS1'-LS4'), and the diverter (4) clock-integrates the transport units (1, 1.1-1.4, 1.1'-1.9') respectively in such a way into the indexing conveyor (2, 2') that the number of carriers (21, 21.1, 21a-b) between two successive transport units (1 , 1.1-1.4, 1.1'-1.9') in the logical segment (LS, LS1-LS4, LS1'-LS4') corresponds to the assigned carrier value of the extension region.

## Revendications

1. Dispositif de transport (100, 100') pour l'intégration cadencée d'unités de transport (1, 1.1-1.4, 1.1'-1.9'), comprenant une pluralité d'unités de transport, un convoyeur d'indexation (2, 2') pour le transport cadencé des unités de transport, le convoyeur d'indexation comprenant une pluralité de douilles d'accouplement (21, 21.1, 21a-b), qui sont respectivement connectables de manière amovible à une unité de transport, au moins une section de transport (3, 3.1, 3.2), et une dispositif d'aiguillage (4), par lequel la section de transport est reliée à un point d'intégration d'horloge (E) au convoyeur d'indexation et qui est configuré pour intégrer les unités de transport au point d'intégration d'horloge dans le convoyeur d'indexation, **caractérisé en ce que** la section de transport (3, 3.1, 3.2) est équipée d'un premier dispositif de détection (6.1), qui est configuré pour détecter respectivement l'extension (T, T2-T4, T2'-T4') d'une unité de transport (1, 1.1-1.4, 1.1'-1.9'), et le dispositif de transport (100, 100') possède un système de contrôle (10, 10'), qui est connecté au premier dispositif de détection et a la dispositif d'aiguillage (4) et qui est configuré pour diviser le convoyeur d'indexation (2, 2') le long de la direction de transport en segments logiques (LS, LS1-LS4, LS1'-LS4') ayant respectivement au moins une zone d'extension assignée et pour comparer l'extension respective détectée d'une unité de transport au point d'intégration de l'horloge (E) avec la zone d'extension au moins d'un segment logique au point d'intégration de l'horloge, la dispositif d'aiguillage étant configuré pour intégrer une unité de transport dans le convoyeur d'indexation lorsque l'extension détectée de l'unité de transport au point d'intégration de l'horloge se trouve dans la zone d'extension au moins du segment logique au point d'intégration de l'horloge.

2. Dispositif de transport (100, 100') selon la revendication 1, **caractérisé en ce que** le système de contrôle (10, 10') est configuré pour attribuer respectivement à la au moins une zone d'extension une valeur de support d'un nombre de douilles d'accouplement (21, 21.1, 21a-b) entre deux unités de transport successives (1, 1.1'-1.4, 1.1'-1.9') dans le segment logique respectif (LS, LS1-LS4, LS1'-LS4'), et la dispositif d'aiguillage (4) est configuré pour intégrer par cadencement les unités de transport (1, 1 .1-1 .4, 1 .1'-1.9') respectivement dans le convoyeur d'indexation (2, 2') de manière à ce que le nombre de douilles d'accouplement (21,21.1, 21a-b) entre deux unités de transport successives (1, 1.1-1.4, 1.1'-1.9') dans le segment logique (LS, LS1-LS4, LS1'-LS4') corresponde à la valeur de douille d'accouplementassignée de la région d'extension.

3. Dispositif de transport (100, 100') selon la revendication 1 ou 2, **caractérisé en ce que** la dispositif d'aiguillage (4) est configuré pour retenir une unité de transport (1, 1.1-1.4, 1.1'-1.9') dans la section de transport (3, 3.1, 3.2) lorsque l'extension détectée (T, T2-T4, T2'-T4') de l'unité de transport (1, 1.1-1.4, 1 .1'-1.9') au point d'intégration des horloges (E) se situe en dehors de la région d'extension au moins du segment logique (LS, LS1-LS4, LS1'-LS4') au point d'intégration des horloges (E).

4. Dispositif de transport (100, 100') selon l'une des revendications précédentes, **caractérisé en ce que** les unités de transport (1, 1.1-1.4, 1.1'-1.9') peuvent être transportées sur la section de transport (3, 3.1, 3.2) à une distance variable les unes des autres.

5. Dispositif de transport (100, 100') selon l'une des revendications précédentes, **caractérisé en ce que** la section de transport (3, 3.1, 3.2) au point d'intégration de l'horloge (E) présente une courbure.

6. Dispositif de transport (100, 100') selon l'une des revendications précédentes, **caractérisé en ce que** les unités de transport (1, 1.1-1.4, 1.1'-1.9') comportent respectivement une unité de réception (11, 1.11 -1.41), l'extension (T, T2-T4, T2'-T4') des unités de transport étant définie par l'extension des unités de réception (11, 1.11 -1 .41), de préférence dans le sens du transport.

7. Dispositif de transport (100, 100') selon la revendication 6, **caractérisé en ce que** les unités de transport (1, 1.1-1.4, 1.1'-1.9') comportent respectivement un chariot (12, 1.12-1.42) auquel les unités de réception (11, 1.11-1.41) peuvent être respectivement fixées, les chariots (12, 1.1 2-1.42) pouvant être mis en prise avec les douilles d'accouplement (21, 21.1, 21a-b) du convoyeur d'indexation (2, 2'), de préférence par l'intermédiaire d'une goupille (121).

8. Dispositif de transport (100, 100') selon l'une des revendications précédentes, **caractérisé en ce que** la section de transport (3, 3.1, 3.2) comporte une station d'alimentation (5) configurée pour charger les unités de transport (1, 1.1-1.4, 1.1'-1.9') en marchandises de transport (G).

9. Dispositif de transport (100, 100') selon l'une des revendications précédentes, **caractérisé en ce qu'**après le point d'intégration de l'horloge (E) est disposé sur le convoyeur d'indexation (2, 2') un capteur, qui est connecté au système de contrôle (10, 10') et configuré pour détecter le nombre et/ou la position des unités de transport (1, 1.1-1.4, 1.1'-1.9') dans un segment logique (LS, LS1-LS4, LS1'-LS4').

10. Dispositif de transport (100, 100') selon l'une des revendications précédentes, **caractérisé en ce que** le convoyeur d'indexation (2, 2') comporte une chaîne (22) avec maillons (221) sur laquelle sont disposés les douilles d'accouplement (21, 21.1, 21a-b).

11. Dispositif de transport (100, 100') selon l'une des revendications précédentes, **caractérisé en ce que** dans la section de transport (3, 3.1, 3.2) avant la dispositif d'aiguillage (4) est disposé un deuxième dispositif de détection (6.3), qui est connecté au système de contrôle (10, 10') et qui est configuré pour détecter l'extension (T, T2-T4, T2'-T4') des unités de transport (1, 1.1'-1.4, 1.1'-1.9') avant la dispositif d'aiguillage (4) et pour la comparer avec l'extension (T, T2-T4, T2'-T4') détectée par le premier dispositif de détection (6.1).

12. Dispositif de transport (100, 100') selon l'une des revendications précédentes, **caractérisé en ce que** le premier dispositif de détection (6.1) est configuré pour détecter la profondeur (T,T2-T4,T2'-T4') d'une unité de transport (1, 1 .1-1 .4, 1.1'-1.9') le long de la direction de transport et/ou la largeur d'une unité de transport (1, 1.1-1.4, 1.1'-1.9') transversalement à la direction de transport, et le système de contrôle (10, 10') est configuré pour attribuer aux segments logiques (LS, LS1-LS4, LS1'-LS4') des régions d'extension pour les profondeurs (T, T2-T4, T2'-T4') et/ou les largeurs.

13. Dispositif de transport (100, 100') selon l'une des revendications précédentes, **caractérisé en ce que** le système de contrôle (10, 10') est configuré pour attribuer à au moins un segment logique (LS, LS1-LS4, LS1'-LS4') au moins deux régions d'extension disjonctives.

14. Procédé de fonctionnement d'un dispositif de transport (100, 100') selon l'une des revendications précédentes, comprenant les étapes suivantes : i) mise à disposition d'unités de transport (1, 1.1-1.4, 1.1'-1.9') dans une section de transport (3, 3.1,3.2) ; ii) division du convoyeur d'indexation (2, 2') en segments logiques (LS, LS1-LS4, LS1'-LS4') par le système de contrôle (10, 10') ; iii) attribution d'au moins une région d'extension à respectivement un segment logique (LS, LS1 -LS4, LS1'-LS4') par le système de contrôle (10, 10') ; iv) détection de l'extension (T, T2-T4, T2'-T4') des unités de transport (1, 1.1 -1 .4, 1 .1'-1.9') par le premier dispositif de détection ; v) transmission de l'extension détectée (T, T2-T4, T2'-T4') au système de contrôle (10, 10') ou au déviateur (4) ; vi) comparaison de l'extension détectée (T, T2-T4, T2'-T4') d'une unité de transport (1, 1.1'-1.4, 1.1'-1.9') au point d'intégration des horloges (E) avec au moins une région d'extension d'un segment logique (LS, LS1-LS4, LS1'-LS4') au point d'intégration des horloges (E) ; vii) intégration des horloges de l'unité de transport (1, 1 .1-1 .4, 1 .1'-1.9') de la section de transport (3, 3.1, 3.2) dans le transporteur d'indexation (2, 2') par le déviateur (4) lorsque l'extension détectée (T, T2-T4, T2'-T4') se trouve dans l'au moins une zone d'extension.

15. Procédé selon la revendication 14, **caractérisé en ce que** le système de contrôle (10, 10') attribue respectivement à la région d'extension au moins une valeur de douille d'accouplement d'un nombre de douilles d'accouplement (21, 21.1, 21a-b) entre deux unités de transport successives (1, 1.1 -1 .4, 1 .1'-1 .9') dans le segment logique respectif (LS, LS1-LS4, LS1'-LS4'), et la dispositif d'aiguillage (4) intègre par cadencement les unités de transport (1, 1.1-1 .4, 1.1'-1.9') respectivement dans le convoyeur d'indexation (2, 2') de manière à ce que le nombre de douille d'accouplement (21, 21.1, 21a-b) entre deux unités de transport successives (1, 1.1 -1.4, 1 .1'-1 .9') dans le segment logique (LS, LS1-LS4, LS1'-LS4') corresponde à la valeur de douille d'accouplement assignée de la zone d'extension.
